# DEMANDE DE BREVET EUROPEEN

(11) **EP 0 953 578 A2**
(43) Date de publication de la demande: **03.11.1999**
(21) Numéro de dépôt: 99401001.5
(22) Date de dépôt: 23.04.1999
(51) Int. Cl.: C08B 30/12

(54) **Procédé pour la fabrication d'hydrolysats d'amidon à bas de par fractionnement par nanofiltration produits ainsi obtenus, et utilisation de ces produits**

(30) Priorité: 27.04.1998 US 66651; 28.12.1998 US 221902
(71) Demandeur: Roquette Frères, 62136 Lestrem (FR)
(72) Inventeur: Tang, Dan, Quincy - Illinois 62301 (US); Zhou, Liuming, Hamilton, Illinois 62341 (US); Gerhardt, Robert, Sutter, Illinois 62373 (US); Abou-Nemeh, Ibrahim, Quincy, Illinois 62301 (US); Jaundoo, Carl, Quincy, Illinois 62301 (US); Parady, Tom, Hamilton, Illinois 62341 (US)
(74) Mandataire: Boulinguiez, Didier

(57) **Abrégé**

L'invention concerne un procédé de fabrication d'un hydrolysat d'amidon à bas DE, qui met en oeuvre le fractionnement d'un hydrolysat d'amidon comprenant un DE plus élevé qu'environ 18 en utilisant une membrane de nanofiltration, ayant une coupure de poids moléculaire de moins d'environ 4.000 daltons, dans des conditions de nanofiltration efficaces pour résulter en un hydrolysat d'amidon à bas DE comprenant un DE de moins d'environ 25.

L'invention a également pour objet un procédé d'hydrogénation de l'hydrolysat d'amidon à bas DE produit par le procédé selon la présente invention pour conduire à un hydrolysat d'amidon à bas DE hydrogéné.

L'invention concerne également un procédé de fabrication d'une émulsion substantiellement stable thermiquement et au stockage comprenant la formation d'un mélange de l'hydrolysat d'amidon à bas DE selon l'invention avec une concentration efficace d'au moins un ingrédient pour conduire à une émulsion.

Enfin, l'invention concerne un procédé de fabrication d'un encapsulat d'un ingrédient substantiellement sec comprenant les étapes de : (1) formation d'une composition matricielle aqueuse comprenant l'hydrolysat d'amidon à bas DE de l'invention, (2) mélange d'au moins un ingrédient avec ladite composition matricielle pour former un mélange ; et (3) séchage dudit mélange pour conduire à un encapsulat d'ingrédient substantiellement sec.

## Description

La présente invention est relative à la fabrication d'hydrolysats d'amidon de bas DE, qui met en oeuvre le fractionnement d'un hydrolysat d'amidon ayant un DE supérieur à environ 18, en utilisant une membrane de nanofiltration dans des conditions de nanofiltration conduisant à des hydrolysats d'amidon de bas DE ayant un DE inférieur à environ 25. L'invention concerne également les hydrolysats d'amidon à bas DE obtenus, les mélanges de ces hydrolysats d'amidon à bas DE avec d'autres substances, et les émulsions et les encapsulats préparés en utilisant ces hydrolysats d'amidon à bas DE.

Les maltodextrines, qui sont des hydrolysats d'amidon de bas DE ayant un dextrose équivalent (DE) inférieur à environ 20, par exemple de 4 à 20, ont un goût insipide, un faible pouvoir sucrant, et une hygroscopicité faible. De tels produits sont utiles comme base pour la préparation d'articles alimentaires, aussi bien comme agents donnant du corps que comme additifs ayant des propriétés de faible pouvoir sucrant, de rétention d'eau et de non hygroscopicité. D'autres applications incluent leur utilisation comme support pour les édulcorants synthétiques, comme supports de séchage par atomisation, comme agents de masse, de texture ou de dispersion, comme agents rétenteurs d'eau, et comme source d'énergie dans les boissons pour sportifs.

La plupart des maltodextrines disponibles commercialement sur le marché mondial sont produites par une technologie connue, se présentent sous forme solide ou sous forme cristalline en raison des phénomènes de rétrogradation ou de formation de voile ou de l'instabilité microbiologique rencontrée sous la forme liquide. Cependant, il existe un besoin pour des maltodextrines sous forme liquide qui présentent une très grande clarté, une basse viscosité, et qui ne développent pas de rétrogradation au stockage à température ambiante.

Il existe déjà des maltodextrines liquides de bas DE fabriquées selon des procédés conventionnels, tels que la conversion enzymatique, le fractionnement chromatographique et le fractionnement par membrane. Cependant, ces produits souffrent de plusieurs désavantages, incluant une instabilité sous forme liquide ou une haute viscosité.

Les brevets US n° 3,974,033 et 3,974,034 décrivent des procédés pour fabriquer une maltodextrine de bas DE et pour améliorer la stabilité par hydrolyse enzymatique d'amidon oxydé. La maltodextrine est caractérisée par le fait qu'elle ne se trouble pas après une longue période de temps à des concentrations élevées de matière sèche. La maltodextrine est préparée tout d'abord en liquéfiant un amidon hautement oxydé avec de l'acide ou des enzymes à un DE qui n'est pas substantiellement supérieur à environ 7 ; et, dans une étape subséquente, à convertir l'amidon oxydé et liquéfié avec une préparation enzymatique d'alpha-amylase bactérienne de façon à obtenir une maltodextrine ayant un DE qui n'est pas substantiellement supérieur à environ 20.

Le brevet US n° 4,298,400 décrit une autre méthode d'hydrolyse enzymatique pour produire des hydrolysats d'amidon liquide de bas DE et qui ne se troublent pas au stockage. Le produit, préparé par une hydrolyse en deux étapes utilisant toutes deux de l'alpha amylase bactérienne, a un ratio descriptif supérieur à 2.0 et, par conséquent, possède des propriétés de non-trouble.

Le brevet US n° 4,840,807 décrit une méthode de fractionnement pour produire des maltodextrines branchées liquides de bas DE. Le procédé comprend les étapes consistant à faire réagir une alpha-amylase avec l'amidon pour produire un hydrolysat d'amidon ayant un DE de 10 à 35, puis à mettre en contact la solution saccharifiée résultante avec un agent filtrant du type gel, de façon à fractionner sélectivement la dextrine branchée et les oligosaccharides linéaires. L'agent filtrant de type gel est une résine échangeuse d'ions et le système de fractionnement est un lit mobile simulé. Les oligosaccharides branchés résultants ont un poids moléculaire moyen d'environ 800 à environ 16.000 avec un DE correspondant d'environ 20 à environ 1.

La séparation par membrane est connue pour fractionner les polysaccharides des sucres. Waniska et al. (Journal of Food Science, Vol. 45 (1980), 1259) décrit la capacité de fractionnement de trois membranes d'ultra filtration (UF) comparée avec la perméation de gel et la chromatographie, pour séparer les oligosaccharides (DP5 - 20) de sucres de plus bas poids moléculaire. Birch et al. (Die Stärke 26. Jahrg./Nr. 7.220) décrit le fractionnement de sirops de glucose par osmose inverse (OI) qui offre des moyens pour la fabrication de plusieurs nouveaux types de sirops et qui permet l'élimination de groupes entiers de sucres dans des conditions sélectionnées. Des produits dans la gamme 43-80 DE ou 15-43 DE peuvent être obtenus en utilisant des combinaisons adéquates de membranes différentes. Kearley et al. (Die Stärke 28 Jahrg. 1976/Nr.4,138) décrit l'osmose inverse (OI) de sirops de glucose et des opérations d'ultra filtration (UF) afin d'isoler des groupes spécifiques de sucres, de poids moléculaire haut ou faible ou les deux, à partir des sirops. Sloan et al. (Preparative Biochemistry, 15(4), 1985, 259-279) décrivent la filtration moléculaire des membranes d'ultrafiltration (UF) pour concentrer les oligosaccharides avec des degrés de polymérisation au-dessus de 10 à partir d'hydrolysat d'amidon de maïs. On pense qu'aucun de ces procédés a été utilisé pour fabriquer des maltodextrines non-rétrogradées ayant une faible viscosité.

Tous ceux qui sont concernés par le domaine des hydrolysats d'amidon à bas DE reconnaissent le besoin d'un hydrolysat d'amidon de bas DE amélioré, particulièrement sous forme liquide, et plus particulièrement, en mélange avec d'autres substances. Une recherche substantielle a été dirigée sur le problème d'instabilité inhérente des émulsions de systèmes multiphasiques, définis comme des systèmes thermodynamiquement métastables ou instables. La stabilité d'une émulsion est un phénomène compliqué qui est fonction de plusieurs variables, par exemple la viscosité, la température, la distribution en taille des micro-gouttelettes en phase interne, la vitesse d'agitation et le temps, le type de surfactant et la concentration, le rapport de phase et la composition, la conductivité, et la constante diélectrique (P. Sherman « Emulsion Science », Academic press, N.Y, 2^{nd} Ed. (1988) ; I. Abou Nemeh et A.P. Van-Peteghem « Membrane Aging and Related Phenomena in liquid Surfactant Membranes Process », Sep.Sci.Technol. 29(6), 727-41 (1994)).

Par conséquent, ceux qui sont concernés par la fabrication des émulsions reconnaissent le besoin pour des compositions à base d'émulsions améliorées présentant une stabilité à long terme des émulsions comprenant, par exemple, des arômes, des huiles, des parfums, des colorants, des insecticides, des substances biologiquement actives, etc.

En outre, il est bien connu et scientifiquement documenté dans le domaine de l'encapsulation des substances volatiles, des huiles, des parfums, etc., que pour que ces substances soient fixées et encapsulées dans un substrat de type vitreux, il est recommandé d'avoir une certaine composition qui contient un matériau spécifique, par exemple des oligosaccharides de haut poids moléculaire, des maltodextrines, de l'amidon, etc, qui augmentera les propriétés de formation de film du mélange et améliorera sa capacité d'encapsulation pour les applications en atomisation ou en extrusion (Brevets US 4,689,235 ; US 3,764,346).

Cependant, l'encapsulation à l'aide d'hydrolysats d'amidon conventionnels souffre de plusieurs problèmes, incluant : viscosité élevée du substrat hydrolysat d'amidon à bas DE, faible capacité de charge, stabilité médiocre de l'encapsulat, et formation de sous-produits colorés.

Par conséquent, les personnes versées dans le domaine de l'encapsulation reconnaissent le besoin de compositions améliorées d'encapsulation qui soient stables, présentent des capacités de charge améliorées et une meilleure rétention, par exemple, des parfums, huiles, arômes, teintures, insecticides, médicaments, produits chimiques conventionnels ou de chimie fine, etc, et qui puissent être dépourvues d'anti-oxydant et fabriquées en utilisant des substrats à teneur relativement basse en matières sèches avec une capacité supérieure de formation de film et une capacité d'encapsulation meilleure.

La présente invention a pour objet un procédé de fabrication d'hydrolysat d'amidon à bas DE, qui met en oeuvre le fractionnement d'un hydrolysat d'amidon ayant un DE supérieur à environ 18, en utilisant une membrane de nanofiltration, de préférence sélectionnée dans le groupe des membranes en téflon, des membranes en acier inoxydable, des membranes céramiques, et des membranes polymériques ; et/ou ayant une coupure de poids moléculaire inférieur à environ 4.000 daltons dans des conditions de nanofiltration aptes à conduire à un hydrolysat d'amidon de bas DE ayant un DE inférieur à environ 25.

Conformément à la présente invention, de telles membranes de nanofiltration comprennent de préférence une membrane composite à film mince, ladite membrane étant sélectionnée dans le groupe des membranes polyamides et des membranes polysulfones polysulfonées.

Selon un mode de réalisation de la présente invention, l'hydrolysat d'amidon de bas DE comprend un hydrolysat d'amidon liquide de bas DE ayant un DE inférieur à environ 25 et un indice de polydispersité inférieur à environ 5. L'hydrolysat d'amidon de bas DE, liquide, comprend de préférence une teneur en matière sèche comprise entre environ 50 % et environ 85 % et/ou une viscosité à une teneur en matière solide de 70 % et à 25°C inférieur à environ 30.000 centipoises. L'hydrolysat d'amidon à bas DE liquide est de préférence substantiellement non rétrogradant et stable microbiologiquement.

La présente invention concerne également l'hydrogénation et/ou la modification et/ou le séchage de l'hydrolysat d'amidon à bas DE de la présente invention pour conduire à un hydrolysat d'amidon à bas DE hydrogéné, et/ou modifié, et/ou séché.

Un objectif de la présente invention est donc de fournir un procédé par membrane de nanofiltration pour la fabrication d'hydrolysats d'amidon de bas DE ayant un DE inférieur à environ 25 et un indice de polydispersité inférieur à environ 5, particulièrement sous forme liquide, qui sont finalement substantiellement exempts de rétrogradation, et ont une viscosité plus basse, à haute teneur en matière sèche, par comparaison avec des produits conventionnels.

La forme liquide et ses caractéristiques de faible viscosité sont particulièrement adaptées au séchage, de préférence par atomisation ou extrusion, du liquide pour conduire à un produit solide ou substantiellement sec.

La présente invention a également pour objet un procédé pour fabriquer une émulsion ayant une bonne stabilité thermique et une bonne stabilité au stockage, comprenant la formation d'un mélange d'hydrolysat d'amidon à bas DE selon la présente invention, sous sa forme hydrogénée ou non hydrogénée, avec une concentration efficace d'au moins un ingrédient pour conduire à une émulsion caractérisée par une bonne stabilité thermique et au stockage. De préférence, l'émulsion présente une viscosité acceptable pour l'atomisation ou l'extrusion.

Un autre objectif de la présente invention est de fournir un procédé pour fabriquer un encapsulat d'un ingrédient, substantiellement sec, comprenant l'étape de formation d'une composition matricielle aqueuse comprenant l'hydrolysat d'amidon à bas DE selon la présente invention, sous forme non hydrogénée, ou hydrogénée, ou modifiée ; le mélange d'au moins un ingrédient avec ladite composition matricielle pour former un mélange ; et le séchage dudit mélange de façon à conduire à un encapsulat de l'ingrédient substantiellement sec.

La figure ci-après présente un schéma du procédé de nanofiltration conforme à l'invention.

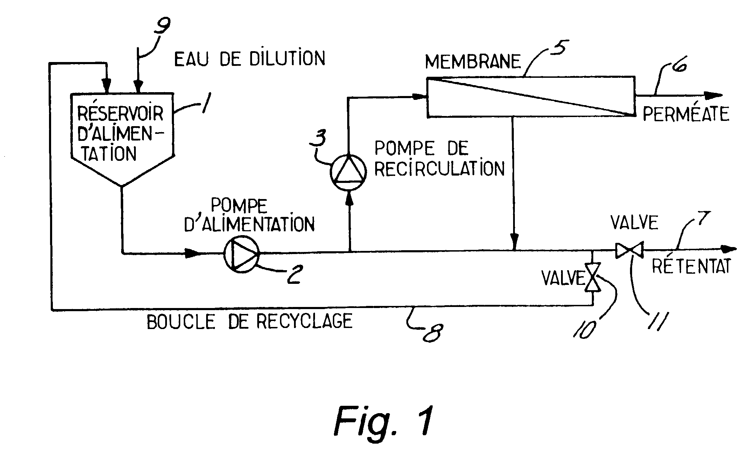

On présente dans ce qui suit une description détaillée de l'invention revendiquée. Les hydrolysats d'amidon de bas DE selon la présente invention sont fabriqués par un procédé de filtration sur nanomembrane présenté figure 1.

En général, le procédé de fabrication de l'hydrolysat d'amidon de bas DE conforme à la présente invention met en oeuvre le fractionnement d'un hydrolysat d'amidon ayant un DE plus élevé qu'environ 18, et en particulier plus élevé qu'environ 21, en utilisant une membrane de nanofiltration, de préférence sélectionnée dans le groupe consistant dans les membranes de téflon, les membranes en acier inoxydable, les membranes de céramique, et les membranes de polymère, et/ou ayant une coupure de poids moléculaire de moins d'environ 4.000 daltons, dans des conditions de nanofiltration efficaces pour conduire à un hydrolysat d'amidon à faible DE ayant un DE de moins d'environ 25.

Les hydrolysats d'amidon ayant un DE plus élevé qu'environ 18, pouvant être utilisés pour les besoins de la présente invention, sont des hydrolysats d'amidon ayant un DE supérieur à environ 18, et en particulier supérieur à environ 21, et qui peuvent être sous forme non hydrogénée, hydrogénée, oxydée, ou sous une autre forme dérivée, qui sont efficaces pour conduire à un hydrolysat d'amidon de bas DE de moins d'environ 25 par fractionnement conformément à la présente invention.

Conformément à l'invention, les membranes polymériques de nanofiltration sont sélectionnées de préférence dans le groupe consistant dans les membranes polyamides et les membranes polysulfones polysulfonées.

Pour les besoins de la présente invention, les membranes de nanofiltration sont plus préférentiellement sélectionnées dans le groupe consistant dans les membranes polyamides et les membranes polysulfones polysulfonées ayant une coupure de poids moléculaire dans la gamme d'environ 400 à environ 4.000 daltons, plus préférentiellement dans la gamme d'environ 800 à environ 2.500 daltons, et plus préférentiellement d'environ 1.000 daltons. De telles membranes de nanofiltration comprennent de préférence une membrane composite à film mince, cette dernière étant sélectionnée dans le groupe consistant dans les membranes polyamides et les membranes polysulfones polysulfonées. Des exemples spécifiques de membranes de nanofiltration incluent les membranes sélectionnées dans le groupe consistant dans les membranes ASP40 et ASP50 (fabriquées par Advanced Membrane Technology) ; et les membranes GH et GE (fabriquées par Osmonics / Desal). Les membranes composites à film mince peuvent comprendre du polysulfone comme support et du polyester comme renfort. La configuration de la membrane peut être sélectionnée dans le groupe consistant en des feuilles plates, des tubes, et des membranes spiralées.

Le flux de perméat défini en litres par mètre carré par heure, dans les procédés de nanofiltration conformes à la présente invention, varie avec la pression. Plus la pression est élevée, plus élevé est le flux. Conformément au procédé de la présente invention, l'étape de nanofiltration selon l'invention est effectuée à une pression préférentiellement inférieure à 4,1.10⁶Pa, et plus préférentiellement encore à une pression comprise entre environ 6,9.10⁵Pa et environ 3,45.10⁶Pa. Par contraste, les procédés conventionnels d'osmose inverse requièrent typiquement une pression opératoire de 3,45 à 17,25 10⁶ Pa, de façon à obtenir un flux significatif. Conformément à la présente invention, le flux de perméat pour un matériau d'alimentation constitué de sirop de glucose ayant un DE de 36 et une teneur en matières solides de 30 % à 50°C, à une pression d'environ 3,31. 10⁶Pa, n'est pas inférieur à 20,4 1/m²/h.

Le flux de perméat dans le procédé de nanofiltration varie également selon la température. Une élévation de la température opératoire d'environ 10°C peut accroître le flux d'une valeur aussi élevée que 100 %. Cependant, comme la température opératoire s'accroît, il y a un accroissement de la tendance de certaines membranes (par exemple polymériques) à la rupture. Il en résulte que l'étape de nanofiltration des procédés selon la présente invention est effectuée à une température aussi haute que possible pour obtenir le flux de perméat maximum sans endommager les matériaux et la structure de la membrane ou sans dégrader le produit. Par conséquent, la température opératoire des procédés de nanofiltration conformes à la présente invention est préférentiellement inférieure à environ 95°C, préférentiellement comprise dans la gamme d'environ 40°C à environ 80°C, et plus préférentiellement encore d'environ 45°C à environ 65°C.

En conséquence de quoi, un hydrolysat d'amidon à bas DE est fractionné en utilisant une telle membrane de nanofiltration dans des conditions de nanofiltration qui comprennent une pression inférieure à environ 4,1.10⁶Pa, préférentiellement à une pression inférieure à environ 3,45.10⁶Pa, et à une température inférieure à 95°C, de préférence à une température inférieure à environ 80°C.

L'étape de nanofiltration selon la présente invention peut être effectuée comme une opération discontinue ou comme opération continue. Une opération discontinue peut être effectuée en utilisant un élément de membrane de nanofiltration unitaire fermé ou une pluralité d'éléments de membrane de nanofiltration en parallèle ou en série, où un hydrolysat d'amidon donné comme matériau d'alimentation de départ est fractionné à travers une membrane de nanofiltration adéquate, à une pression et à une température à l'intérieur des gammes de température et de pression décrites respectivement ci-dessus, leur rétentat étant recyclé vers le réservoir d'alimentation afin de réduire le DE du matériau dans ledit réservoir d'alimentation, afin d'obtenir ainsi un hydrolysat d'amidon à bas DE ayant la valeur de DE souhaitée. Dans les opérations continues, l'hydrolysat d'amidon servant de matériau d'alimentation peut être pompé à travers une série d'éléments membranaires en série ou en série-parallèle pour le fractionnement, de façon à réduire le DE de l'hydrolysat d'amidon et obtenir un hydrolysat d'amidon à bas DE ayant la valeur désirée de DE.

Selon un mode de réalisation, le procédé conforme à l'invention comprend le rafinage de l'hydrolysat d'amidon ayant un DE supérieur à environ 18. Ainsi, l'hydrolysat d'amidon est purifié avant le fractionnement sur la membrane de nanofiltration. L'étape de purification ou de rafinage prend place avant la séparation sur membrane.

Selon un autre mode de réalisation, le procédé selon la présente invention comprend la purification de l'hydrolysat d'amidon à bas DE. L'étape de purification a lieu après la séparation sur membrane. Bien sûr, il est possible de mettre en oeuvre les étapes de purification à la fois avant et après l'étape de séparation membranaire.

Aux fins de la présente invention, la purification ou le raffinage comprennent plus préférentiellement un traitement conventionnel sur charbon et un traitement conventionnel sur échangeuse d'ions du matériau destiné à être purifié, afin de décolorer et de déminéraliser ledit matériau.

En se référant à la figure 1, au début du procédé, le matériau de départ, c'est-à-dire un sirop de glucose à environ 30 % de matière sèche, est transféré dans le réservoir d'alimentation 1. Ledit sirop de glucose a préférentiellement un DE supérieur à environ 18. Le matériau de départ est pompé à travers une pompe d'alimentation (2) sur un élément membranaire. Une pompe de recirculation (3) est utilisée de façon à accroître la vitesse de passage du liquide. Le matériau d'alimentation est soumis au fractionnement sur membrane par perméation des matériaux de bas poids moléculaire tels que les oligosaccharides inférieurs à DP5 à travers une membrane de nanofiltration qui retient les matériaux ayant des poids moléculaires élevés. Le perméat (6) provenant de la membrane (5) est sorti du système. Le rétentat (7) des membranes (5) est recyclé (8) jusqu'au réservoir d'alimentation (1) jusqu'à ce que le DE du rétentat (7) atteigne la valeur désirée, préférentiellement inférieure à 20 DE. Puisque le rétentat (7) est recyclé (8) jusqu'au réservoir d'alimentation (1) durant le procédé discontinu, la teneur en matière sèche s'accroît. De ce fait, de l'eau de dilution (9) doit être ajoutée de façon à maintenir un flux élevé de fractionnement sur membrane. Dans le procédé continu, la valve 10 est toujours fermée, et il n'y a pas de recyclage du fluide jusqu'au réservoir.

Selon un mode de réalisation de la présente invention, l'hydrolysat d'amidon à bas DE qui est fabriqué comprend un hydrolysat d'amidon à bas DE liquide ayant un DE de moins d'environ 25. L'hydrolysat d'amidon liquide à bas DE comprend de préférence une teneur en matières solides située entre environ 50 % et environ 85 %. L'hydrolysat d'amidon liquide à bas DE a de préférence une viscosité à 70 % de matières sèches et à 25°C de moins d'environ 30.000 centipoises (cp), mesurée à l'aide d'un viscosimètre Brookfield. Dans le cadre de la présente invention, la viscosité à 70 % de matières sèches et à 25°C est plus préférentiellement comprise entre environ 4.000 cp et 20.000 cp.

Les hydrolysats d'amidon à bas DE produits conformément à la présente invention ont une viscosité plus basse que les matériaux conventionnellement convertis par voie acide ou par voie enzymatique et ayant substantiellement le même DE. Pour un produit de même DE, la viscosité s'accroît avec une plus haute concentration de produits à longue chaîne moléculaire (par exemple des oligosaccharides de DP21+). Sans vouloir être lié par une quelconque théorie, la plus faible viscosité des produits fabriqués conformément à la présente invention est attribuée à la concentration plus basse en poids de produits de DP21+, qui est seulement d'environ 11 % à environ 14 DE. Ceci est en contraste avec une maltodextrine à 14 DE convertie de façon conventionnelle, qui possède au moins environ 40 % de DP21+. En général, une maltodextrine produite par nanofiltration, de 18 DE et 70 % de matières sèches à 25°C présente une viscosité de moins d'environ 8.000 centipoises. En comparaison, une maltodextrine convertie de façon conventionnelle par voie enzymatique, de même DE, de même matière sèche, présente une viscosité à la même température d'environ 20.000 centipoises (cp) . La faible viscosité des hydrolysats d'amidon et des maltodextrines de faible DE produits conformément à la présente invention permet à de tels produits d'être concentrés ou évaporés jusqu'à une matière sèche d'environ 80 %, ou plus, sans aucune difficulté.

Une haute teneur en matière sèche, par exemple égale ou supérieure à environ 75 %, conduit à un avantage supplémentaire des hydrolysats d'amidon à bas DE selon la présente invention, qui réside dans une bonne stabilité microbienne. L'activité de l'eau des hydrolysats d'amidon et des maltodextrines à faible DE produits conformément à la présente invention, à une teneur en matière sèche d'environ 75 %, est inférieure à environ 0.86 à la température ambiante, ce qui est suffisamment stable pour l'expédition sous forme liquide.

L'hydrolysat d'amidon à bas DE conforme à la présente invention a de préférence un DE de moins d'environ 25, un indice de polydispersité d'au moins d'environ 5, présente une concentration en poids de mono et disaccharides inférieurs à environ 10 %, et une concentration en poids d'oligosaccharides de degré de polymérisation supérieur à environ 21 inférieure à 40 %. De préférence, le produit hydrolysat d'amidon à bas DE comprend un hydrolysat d'amidon à bas DE liquide ayant une teneur en eau comprise entre environ 50 % et environ 85 % et/ou une viscosité à une teneur en matières sèches de 70 % et à 25°C de moins d'environ 30.000 cp, de préférence d'environ 2.000 cp à environ 25.000 cp, et plus préférentiellement encore d'environ 4.000 cp à environ 20.000 cp.

Conformément à l'invention, les produits hydrolysats d'amidon à bas DE ont un DE compris dans la gamme d'environ 4 à environ 20. La concentration des mono- et des disaccharides est inférieure à environ 10 % en poids ; et la concentration des oligosaccharides ayant une degré de polymérisation supérieur à environ 21 est inférieure à environ 35 % et de préférence inférieure à environ 30 % en poids.

Les hydrolysats d'amidon à bas DE produits conformément à la présente invention présentent une bonne stabilité en solution liquide, une faible viscosité, et peuvent demeurer exempts de rétrogradation substantielle sur de longues périodes, même à des teneurs en matières sèches élevées, à des températures ambiantes ou à des températures de réfrigération.

Les hydrolysats à faible DE et les maltodextrines conformes à la présente invention ont normalement un DE non substantiellement supérieur à 25 pour les hydrolysats d'amidon à bas DE, et non substantiellement supérieurs à 20 pour les maltodextrines. Les hydrolysats d'amidon et les maltodextrines à faible DE conformes à la présente invention ont de préférence un DE de 4 à 20. Une maltodextrine typique fabriquée conformément à la présente invention a généralement un DE d'environ 8 à environ 18.

Telle qu'utilisée ici, l'expression hydrolysat d'amidon à bas DE signifie un hydrolysat d'amidon ayant un DE non supérieur à environ 25. La maltodextrine est un hydrolysat d'amidon ayant un DE non supérieur à environ 20.

Le terme de dextrose équivalent (DE) auquel il est fait référence, est défini comme étant la valeur réductrice de la maltodextrine ou de l'hydrolysat d'amidon, matériau comparé à la valeur réductrice d'un poids égal de dextrose, exprimé en %, sur matière sèche, telle que mesurée par la méthode de School décrite dans Encyclopedia of Industrial Chemical Analysis, Vol. 11, pages 41-42.

Le terme « indice de polydispersité », également appelé « indice de polymolécularité » est défini comme le rapport Mw/Mn, dans lequel Mw est le poids moléculaire moyen en poids et Mn est le poids moléculaire moyen en nombre. Ce rapport permet de caractériser la dispersité globale des poids moléculaires d'un mélange polymérique. En pratique, les valeurs de Mw et de Mn peuvent être déterminées par chromatographie de perméation sur gel, qui est une technique bien connue de l'homme de l'art.

Les termes « non rétrogradant », « exempt de rétrogradation » et termes similaires, doivent être compris comme étant synonymes de « exempt de trouble », ce qui est défini par une absorbance de moins d'environ 0.3, et de préférence inférieure à environ 0.1, cette absorbance étant mesurée spectrophotométriquement à environ 600 nm après stockage à température ambiante, c'est-à-dire à environ 23°C, pendant environ trois mois.

Tels qu'utilisés dans le cadre de la présente invention, les termes « stable », « stabilité », et termes similaires, se réfèrent à la stabilité microbienne et/ou à la stabilité physique.

Bien que la présente invention soit décrite en utilisant des hydrolysats d'amidon de maïs, également appelés « corn syrup », fabriqués à partir de maïs à teneur standard en amylose, les sirops de glucose et les hydrolysats d'amidon de diverses céréales (par exemple le blé), de tubercules (par exemple la pomme de terre) ou autres sources d'amidon (par exemple la chicorée) et autres types (par exemple le waxy) peuvent être utilisés.

Les hydrolysats d'amidon à bas DE selon la présente invention ont une distribution saccharidique étroite. En général, l'indice de polydispersité est inférieur à environ 5 et la quantité de monosaccharides et de disaccharides est inférieure à environ 10 % en poids et la quantité d'oligosaccharides de degré de polymérisation plus élevée qu'environ 21 est inférieure à environ 40 % en poids, de préférence inférieure à environ 35 % en poids et plus préférentiellement encore inférieure à environ 30 % en poids.

L'hydrolysat d'amidon à bas DE peut être utilisé pour produire un mélange qui comprend l'hydrolysat d'amidon liquide à faible DE qui est substantiellement non rétrogradant, avec au moins une autre substance, dans un rapport de mélange prédéterminé, afin de fournir un mélange comprenant l'hydrolysat d'amidon à faible DE.

L'autre substance est préférentiellement un carbohydrate sélectionné dans le groupe consistant dans les alcools de sucre tels que le sorbitol, le mannitol, le xylitol, le maltitol, l'érythritol, l'isomalt, et les hydrolysats d'amidon hydrogéné (par exemple les sirops de maltitol), le propylène glycol, la glycérine, et les saccharides tels que l'inuline, les sirops de glucose, les sirops de maltose, et les sirops de fructose, le lactose, l'érythrose, le xylose et l'isomaltose. De préférence, le mélange comprenant l'hydrolysat d'amidon à bas DE fabriqué conformément avec ce mode de réalisation de la présente invention est substantiellement non rétrogradant.

Les hydrolysats d'amidon à faible DE et les maltodextrines produits par le procédé de fractionnement sur membrane de nanofiltration selon la présente invention peuvent être mélangés ou combinés de quelque façon que ce soit avec de telles substances pour obtenir un mélange ayant une plus faible viscosité et une plus faible activité de l'eau qu'un produit de mélange utilisant les maltodextrines conventionnelles ayant substantiellement le même DE.

Le procédé de la présente invention concerne également le séchage de l'hydrolysat d'amidon liquide de bas DE pour conduire à un produit substantiellement sec. De préférence, l'hydrolysat d'amidon de bas DE résultant présente une teneur en humidité de moins d'environ 10 % en poids.

Les moyens de séchage qui peuvent être utilisés dans le but de déshydrater l'hydrolysat d'amidon liquide à faible DE selon la présente invention incluent les appareils et méthodes de déshydratation conventionnels propres à la déshydratation des liquides ayant les caractéristiques, telles que les viscosités, similaires à celles des hydrolysats d'amidon à bas DE. De préférence, le séchage comprend l'atomisation ou l'extrusion.

Le procédé selon la présente invention concerne également l'hydrogénation de l'hydrolysat d'amidon à bas DE ayant un DE de moins d'environ 25, pour résulter en un hydrolysat d'amidon à bas DE hydrogéné, lequel peut être liquide ou substantiellement sec.

La co-hydrogénation d'un mélange comprenant l'hydrolysat d'amidon à bas DE peut être également effectuée. De préférence, cette co-hydrogénation comprend le mélange d'un hydrolysat d'amidon à bas DE produit par nanofiltration avec au moins une autre substance, de préférence un carbohydrate comme défini ci-dessus, pour former un mélange à base d'hydrolysat d'amidon à bas DE ; et l'hydrogénation du mélange à base d'hydrolysat d'amidon à bas DE pour résulter en un mélange hydrogéné.

Afin d'obtenir les produits hydrogénés correspondants, c'est-à-dire les hydrolysats d'amidon à bas DE hydrogénés et les mélanges décrits ci-dessus, ceux-ci peuvent être soumis à une hydrogénation conventionnelle. Par exemple, l'hydrolysat d'amidon à bas DE résultant du fractionnement par nanofiltration peut être soumis à une hydrogénation sur nickel de Raney dans des conditions adéquates.

Ainsi, conformément à la présente invention, les produits hydrolysat d'amidon et maltodextrines à bas DE peuvent être liquides ou substantiellement secs, hydrogénés ou non hydrogénés, substantiellement non rétrogradants ou rétrogradants, et mélangés ou non avec un carbohydrate ou d'autres substances. La forme hydrogénée de l'hydrolysat d'amidon et de la maltodextrine à bas DE peut être obtenue par hydrogénation conventionnelle de l'hydrolysat d'amidon à bas DE, par hydrogénation de l'hydrolysat d'amidon comme matériau de départ, ou par co-hydrogénation d'un mélange comprenant un hydrolysat d'amidon à bas DE et d'autres substances, qui peuvent être des carbohydrates.

En se référant à la figure 1, conformément au procédé selon la présente invention, un hydrolysat d'amidon de maïs converti de façon conventionnelle, également décrit ci-dessous comme « sirop », ayant un DE plus élevé qu'environ 18 DE, et de préférence supérieur à environ 21, et en particulier d'un DE compris entre environ 28 DE et 50 DE, est alimenté dans la membrane de nanofiltration, ainsi qu'indiqué sur la figure 1, pour le fractionnement. Le perméat de la membrane est sorti du système, et le rétentat est recyclé au réservoir d'alimentation pour concentration ultérieure. Une fois que la valeur de DE du rétentat atteint le niveau recherché, qui est de moins d'environ 25 DE, de préférence d'environ 8 à environ 20 DE, la valve 11 montrée en figure 1 est ouverte et la valve 10 est fermée. Le rétentat est envoyé dans un réservoir de stockage en tant que produit. Les pressions et températures opératoires sont d'importants paramètres du procédé. Pour les buts de la présente invention, la pression opératoire du système est contrôlée à moins d'environ 4,1.10⁶ Pa, et de préférence moins d'environ 3,45.10⁶ Pa. Pour les buts de la présente invention, la température opératoire du système est maintenue à moins d'environ 95°C, et de préférence à moins d'environ 80°C. Dans le cadre de la présente invention, un pH compris entre environ 2 et environ 10 est préféré ; et un pH compris entre environ 3 et environ 8 est encore plus préférentiel.

Plus spécifiquement, dans le procédé de la présente invention, un matériau de départ converti par voie acide, tel que des hydrolysats d'amidon de maïs sirop ayant un DE compris dans la gamme d'environ 25 DE à environ 63 DE, mais de préférence dans la gamme préférentielle d'environ 25 DE à environ 42 DE, est pompé à travers la membrane de nanofiltration pour le fractionnement à une pression transmembranaire de moins de 3,45.10⁶ Pa ; le perméat est retiré du système et le rétentat est recyclé dans l'alimentation jusqu'à ce que le DE du sirop ait été réduit jusqu'au niveau désiré, qui est inférieur à environ 25 DE, et de préférence dans la gamme d'environ 8 à environ 20.

Dans le cadre de la présente invention, le DE de l'hydrolysat d'amidon de départ n'est pas inférieur à environ 18 DE, de préférence pas inférieur à environ 21 DE, et plus préférentiellement encore compris entre environ 25 et environ 63 DE. De façon encore plus préférentielle, il se situe dans la gamme d'environ 25 à environ 42 DE.

Toujours dans le cadre de la présente invention, l'hydrolysat d'amidon préféré comprend un membre sélectionné dans le groupe consistant dans les hydrolysats d'amidon de maïs, les hydrolysats d'amidon de blé, les hydrolysats d'amidon de tubercules, et les hydrolysats d'amidon de maïs waxy ainsi que les produits équivalents. De préférence, l'hydrolysat d'amidon comprend les sirops de glucose. Le matériau natif utilisé peut être modifié ou non modifié, bien que les amidons de n'importe quelle source puissent être utilisés. Dans le contexte de la présente invention, l'hydrolysat d'amidon comprenant un DE de pas moins d'environ 18 DE est préparé par un procédé de conversion sélectionné dans le groupe consistant dans une conversion en une étape ou dans une conversion en multi-étapes, de préférence dans laquelle le procédé de conversion est sélectionné dans le groupe consistant dans la conversion acide, la conversion enzymatique, et la conversion mixte acide-enzymatique. Plus préférentiellement, on utilise une conversion acide ou enzyme-enzyme.

Les hydrolysats d'amidon à bas DE et les maltodextrines à bas DE selon la présente invention, soit sous la forme de sirops ou sous forme de poudre sèche, sont particulièrement applicables pour une utilisation dans les produits alimentaires et dans les produits de boissons. Les maltodextrines sont spécialement utiles dans les sirops stables, de faible DE.

Les caractéristiques des hydrolysats et des maltodextrines à bas DE fabriqués en conformité à la présente invention rendent les produits de l'invention particulièrement adéquats dans les applications comme supports pour les agents colorants, les arômes, les parfums et les essences, et les édulcorants synthétiques ; comme auxiliaires de séchage pour les extraits de café et les extraits de thé ; comme agents de charge, de structure ou de texture et comme agents dispersants dans les crèmes synthétiques ou les blanchisseurs de café ; comme ingrédients améliorant la rétention d'eau dans le pain, les patisseries et les viandes ; comme composants des mélanges secs pour soupe, les mélanges pour boulangerie, les mélanges de glaçage, les mélanges d'épices, les poudres de couverture, les condiments, les mélanges pour sauces, les aliments laitiers surgelés et les substituts de matières grasses. En outre, ils sont utiles dans la formulation de produits de mise en forme qui peuvent être utilisés dans les produits alimentaires ou dans les produits pharmaceutiques, les agents anti-agglomérants, les produits aérés, les enrobages protecteurs, les aides d'agglomération, les aliments et boissons à basse teneur en calories ou teneur en calories réduite. En outre, les hydrolysats et maltodextrines à bas DE selon la présente invention sont particulièrement utilisables avec les ingrédients pour boissons, les ingrédients alimentaires, les aliments pour l'alimentation animale, les ingrédients pharmaceutiques, les ingrédients nutraceutiques, les ingrédients cosmétiques et les ingrédients industriels.

La présente invention a également pour objet un procédé pour fabriquer des émulsions substantiellement stables thermiquement et au stockage. Selon une caractéristique préférentielle de la présente invention, l'hydrolysat d'amidon à faible DE utilisé pour fabriquer les émulsions comprend un hydrolysat d'amidon liquide à faible DE. Selon cette caractéristique préférentielle, le procédé comprend le fait de combiner l'hydrolysat d'amidon à faible DE selon la présente invention, dans sa forme hydrogénée ou non hydrogénée, comme décrit dans la présente description, avec une concentration efficace d'au moins un autre ingrédient, pour conduire à une émulsion stable.

Dans le cadre de la présente invention, l'ingrédient comprend de préférence au moins un membre sélectionné dans le groupe consistant dans les produits organoleptiques (par exemple arômes et parfums) les produits chimiques pour l'agriculture (par exemple les insecticides et les engrais), les exhausteurs d'arômes (par exemple l'acétaldéhyde, le citral), les édulcorants de haute intensité (par exemple l'aspartame, et l'acésulfame de potassium), et les substances pharmaceutiques actives (par exemple les hormones de croissance et les inhibiteurs de maturation). L'ingrédient peut être sous forme pure, en combinaison avec d'autres substances, avec ou sans support.

La proportion d'ingrédients, et en particulier d'agents aromatisants à incorporer dans l'émulsion, peut être variée selon la force désirée pour le produit final. Généralement, la concentration efficace d'ingrédients se situe dans une gamme d'environ 0.1 % à environ 50 % en poids.

Conformément à la présente invention, le mélange de l'hydrolysat d'amidon de bas DE selon l'invention et de l'ingrédient peut être accompli par tout moyen convenable, par exemple en mélangeant un hydrolysat d'amidon à bas DE, évaporé jusqu'à une teneur en matière sèche située dans la gamme d'environ 1 % à environ 70 %, avec l'ingrédient dans un réservoir de mélange. D'autres ingrédients peuvent être présents dans l'émulsion conforme à la présente invention. Ces ingrédients incluent les émulsifiants, les agents de contrôle de la viscosité, par exemple les C2-C4 alkylène glycols tels que l'éthylène glycol, le propylène glycol, le butylène glycol, etc., dans des quantités efficaces, généralement en dessous de 15 % en poids. Selon une caractéristique de la présente invention, l'émulsion peut comprendre en outre une quantité d'émulsifiant apte à produire l'émulsion. Dans le cadre de la présente invention, l'émulsifiant est par exemple sélectionné dans le groupe consistant dans les surfactants non ioniques (ester de sorbitan), lécithine, surfactants ioniques (par exemple sodium dodécyl sulfate) , et les surfactants amphotères (par exemple n-alkylbétaines).

Selon l'invention, l'émulsion substantiellement stable thermiquement et au stockage comprend l'hydrolysat d'amidon à bas DE selon l'invention comme matrice aqueuse et au moins un autre ingrédient. Selon une caractéristique préférentielle, la teneur en cet ingrédient est de préférence inférieure à environ 65 % en poids. L'émulsion selon la présente invention peut être une émulsion huile dans l'eau ou une émulsion eau dans l'huile, ladite émulsion comprenant un émulsifiant dans ladite matrice aqueuse. En particulier, ladite émulsion peut être une émulsion eau huile dans eau comprenant l'ingrédient comme phase interne huileuse et l'hydrolysat d'amidon à faible DE selon l'invention comme matrice externe aqueuse.

Les émulsions fabriquées conformément à la présente invention présentent une stabilité d'émulsion améliorée par comparaison aux émulsions produites en utilisant des hydrolysats ou maltodextrines conventionnels à faible DE.

En outre, la présente invention a également pour objet un procédé pour produire un encapsulat d'ingrédient substantiellement sec, comprenant le mélange de l'hydrolysat d'amidon à faible DE liquide, hydrogéné ou non hydrogéné, selon la présente invention, avec une concentration efficace d'au moins un ingrédient pour former un mélange, puis le séchage dudit mélange.

Plus spécifiquement, le procédé conforme à la présente invention met en oeuvre une première étape comprenant la formation d'une composition matricielle aqueuse comprenant l'hydrolysat d'amidon à faible DE selon l'invention, dans sa forme hydrogénée ou non hydrogénée. Une telle composition est utile comme matrice pour encapsuler et piéger l'ingrédient défini ci-dessus dans une structure amorphe, vitreuse, et est supérieure en performance, en comparaison à des maltodextrines en poudre ou des formulations analogues utilisées dans l'industrie d'encapsulation. Dans une caractéristique préférée, l'hydrolysat d'amidon à bas DE comprend une teneur en matière solide située dans la gamme d'environ 25 à environ 55 % en poids.

La seconde étape du procédé conforme à la présente invention comprend le mélange d'au moins un ingrédient avec ladite composition matricielle pour former un mélange. Selon une caractéristique préférentielle, ledit ingrédient est présent dans une gamme d'environ 0.1 % à environ 50 % en poids. Ledit mélange peut comprendre une émulsion et peut contenir un émulsifiant selon la nature de l'ingrédient. Le mélange peut être accompli par tout moyen acceptable et utilisé conventionnellement pour ce but.

Le procédé selon la présente invention met en oeuvre également le séchage dudit mélange pour conduire à un encapsulat d'ingrédient substantiellement sec. Ledit séchage comprend préférentiellement le séchage par atomisation ou l'extrusion. Par conséquent, l'encapsulat d'ingrédient substantiellement sec résultant comprend au moins un ingrédient piégé dans une matrice amorphe de l'hydrolysat d'amidon à faible DE selon la présente invention.

### EXEMPLES

La présente invention va désormais être décrite en plus amples détails au moyen des exemples représentatifs suivants.

### EXEMPLE 1 :

Un sirop de glucose obtenu par conversion acide ayant un DE d'environ 42 et une matière sèche d'environ 23.7 % en poids a été pompé à travers une membrane de nanofiltration, pour un fractionnement utilisant le procédé de nanofiltration à simple passage. Le rétentat a été recyclé jusqu'au réservoir d'alimentation jusqu'à ce que le DE ait été réduit jusqu'à un DE de 14.5. Une membrane de nanofiltration composite à film mince, ASP 40, fabriquée par Advanced Membrane Technology, Inc., San Diego, California, est utilisée pour les divers essais. La membrane ASP 40 a les caractéristiques suivantes :

| | |
|---|---|
| Matériau de la membrane | Composite à film mince de polysulfone sulfoné sur polysulfone, avec un renfort polyester non tissé |
| Configuration | Spiralée |
| Aire de surface | environ 5.3 m² (diamètre de 10,16 cm et longueur de 101,6 cm) |
| Pression opératoire | jusqu'à 4,1.10⁶ Pa environ |
| Température opératoire | jusqu'à environ 60°C |
| Gamme opératoire de pH | environ 2-11 |
| Chore maximum | environ 200 ppm |
| Spécification de rejet | NaCl=30-40%, Lactose=45-65% |

La préparation du matériau de départ consistant en l'hydrolysat d'amidon à 42 DE a été accomplie par des méthodes de conversion acide conventionnelles. Le procédé de conversion était terminé quand la valeur de DE du matériau converti d'amidon de maïs atteignait la valeur d'environ 42. L'amidon de maïs converti à l'acide résultant, à 42 DE, a été clarifié en utilisant une centrifugeuse pour enlever l'huile résiduelle et les protéines résiduelles. Ensuite, un procédé de raffinage au charbon et aux résines échangeuses d'ions a été conduit pour décolorer et déminéraliser le matériau. Finalement, le matériau a été évaporé jusqu'à une teneur en matière sèche d'environ 70 % en poids.

Cinquante sept litres de sirop de glucose converti à l'acide ayant un DE de 42 a alors été introduit dans le réservoir d'alimentation, par exemple comme indiqué à la figure 1, et dilué jusqu'à une teneur en matière sèche d'environ 23.7 % en poids. La ligne de procédé était un système à étape unique ayant un élément de membrane de nanofiltration ayant un diamètre de 10.16 cm. Le procédé de fractionnement a été conduit en opération discontinue. Le perméat a été retiré du système, et le rétentat recyclé jusqu'au réservoir d'alimentation. La valeur de DE a été enregistrée périodiquement. De l'eau de dilution était ajoutée périodiquement dans le réservoir d'alimentation pour maintenir un contenu en matière sèche en dessous d'environ 50 % en poids. Le recyclage du rétentat a été stoppé quand la valeur de DE du rétentat a atteint environ 15 DE. Le rétentat a alors été envoyé et collecté dans un réservoir de stockage comme produit. Le produit collecté avait un volume de 49 litres, et une teneur en matière sèche d'environ 50.5 % en poids.

La ligne de procédé a été mise en oeuvre à une pression d'environ 32,8.10⁶ Pa et à une température d'environ 50°C. Le flux de perméat était de 34,5 l/m²/h au départ et 2,5 l/m²/h à la fin du fractionnement. La maltodextrine résultante est substantiellement exempte de rétrogradation, a un DE de 14.5, et le spectre de carbohydrate suivant :

| Composant | % en poids sur matière sèche |
|---|---|
| Fructose | 0.048 |
| Dextrose | 0.760 |
| DP2 | 1.517 |
| DP3 | 3.557 |
| DP4 | 6.627 |
| DP5 | 8.359 |
| DP6 | 8.442 |
| DP7 | 7.960 |
| DP8 | 7.375 |
| DP9 | 6.759 |
| DP10 | 5.835 |
| DP11-21 | 32.226 |
| DP21+ | 10.534 |

La maltodextrine décrite ci-dessus a été évaporée ultérieurement en utilisant un évaporateur de laboratoire rotatif sous vide pour obtenir un hydrolysat d'amidon à bas DE ayant différentes teneurs en matière sèche. Les produits d'hydrolysat d'amidon à bas DE résultants ont été évalués dans une expérimentation dans laquelle les variables et leur gamme étaient : contenu en matière sèche dans la gamme d'environ 65 % à 75 % en poids ; température de stockage entre 7°C et environ 49°C, teneur en acide sorbique dans la gamme d'environ 0 % à environ 0.15 % en poids ; pH situé entre environ 2.8 à environ 3.5. La couleur, le trouble (représenté par l'absorbance à 600 nM), le comptage direct de bactéries, levures et moisissures ont été évalués au début et après chaque mois de stockage. Après 4 mois de stockage, tous les 28 échantillons testés demeuraient encore transparents, clairs, et exempts de rétrogradation.

L'index de polydispersité de la maltodextrine résultante est de 1.59. La viscosité de la maltodextrine résultante selon l'invention est de 65.500 cp à 75.3 % de matières sèches et 7.450 cp à 70 % de matières sèches, ce qui est plus faible qu'une maltodextrine convertie de façon conventionnelle, comme indiqué dans le tableau 1 de l'exemple 6.

### EXEMPLE 2 :

Dans cet exemple, un sirop de glucose converti par voie acide de 36 DE a été utilisé comme matériau de départ. Ce matériau de départ a été fabriqué par le même procédé que dans l'exemple 1, excepté le fait que la conversion a été arrêtée quand la valeur de DE du matériau converti à l'acide avait atteint environ 36 DE et que le matériau converti n'était pas complètement raffiné par échange d'ions.

Le même système et la même membrane de nanofiltration que dans l'exemple 1 ont été utilisés pour fabriquer l'échantillon de cet exemple. 113,5 litres de sirop de glucose à 36 DE, à une matière sèche d'environ 80 % en poids, ont été alimentés dans le réservoir d'alimentation, tel qu'indiqué dans la figure 1, et dilués jusqu'à une teneur en matière sèche d'environ 32.6 % en poids. Le procédé de fractionnement a été conduit en opération discontinue. Le perméat était retiré du système, et le rétentat a été recyclé jusqu'au réservoir d'alimentation. La valeur de DE était enregistrée périodiquement. L'eau de dilution a été ajoutée périodiquement dans le réservoir d'alimentation pour maintenir une teneur en matières sèches inférieure à environ 50 % en poids. Le recyclage de rétentat a été terminé quand la valeur de DE du rétentat a atteint environ 18 DE. Le rétentat a alors été envoyé plus en aval et collecté dans un réservoir de stockage comme produit. Le produit ainsi obtenu a un volume total collecté d'environ 37 litres et une teneur en matières sèches d'environ 51.3 % en poids.

Les conditions opératoires incluaient une pression d'environ 3,3.10⁶Pa et une température d'environ 50°C. Le flux de perméat était de 2,5 l/m²/h au départ et de 13,9 l/m²/h à la fin du fractionnement. La maltodextrine résultante a un DE de 17.2 et le spectre de carbohydrate suivant :

| Composant | % en poids sur matière sèche |
|---|---|
| Fructose | 0.147 |
| Dextrose | 1.996 |
| DP2 | 3.038 |
| DP3 | 5.803 |
| DP4 | 6.884 |
| DP5 | 9.032 |
| DP6 | 10.626 |
| DP7 | 7.789 |
| DP8 | 5.272 |
| DP9 | 4.218 |
| DP10 | 4.059 |
| DP11-21 | 31.794 |
| DP21+ | 9.342 |

La maltodextrine obtenue a ensuite été évaporée en utilisant un évaporateur sous vide rotatif de laboratoire jusqu'à une teneur en matières sèches de 70.2 % et 75.5 % en poids.

Des échantillons de la maltodextrine à chacun de ces contenus en matières sèches ont été stockés à température ambiante pendant 2 mois et analysés. Tous deux restaient clairs et exempts de rétrogradation. L'index de polydispersité de la maltodextrine résultante est de 2.45. La viscosité de la maltodextrine résultante selon la présente invention est de 6.930 cp à 70 % de matière sèche en poids et à 25°C.

### EXEMPLE 3 :

Un sirop de glucose obtenu par conversion acide ayant un DE d'environ 42 et une matière sèche de 43.5 % est pompé à travers une membrane de nanofiltration pour le fractionnement en utilisant une installation pilote de nanofiltration à simple passage telle que montrée dans la figure. Le rétentat est recyclé jusqu'au réservoir d'alimentation jusqu'à ce que le DE ait été réduit à 14.9. L'installation pilote utilisée pour fabriquer les produits échantillons est fabriquée par Niro, Inc., Hudson, Wisconsin. Une membrane composite polyamide à film mince, GH, est utilisée pour les tests et elle est fabriquée par Desalination System, Inc., Vista, California. La membrane GH a les caractéristiques suivantes :

| | |
|---|---|
| Matériau de la membrane | Composite polyamide à film mince |
| Configuration | Spirale tordue |
| Aire de surface | environ 5.3 m² (diamètre de 10,16 cm et longueur de 101,6 cm) |
| Pression opératoire | jusqu'à 4,1.10⁶Pa environ |
| Température opératoire | jusqu'à environ 50°C |
| Gamme opératoire de pH | 2-11 |
| Chlore maximum | 20-50 ppm / jour |
| Spécification de rejet | 50% MgSO₄ à 1,03.10⁶Pa, et 25°C. |

Le matériau d'alimentation de cet exemple, constitué par le sirop de glucose converti à l'acide de 42 DE, était issu d'amidon de maïs. L'amidon de maïs, à une matière sèche dans la gamme d'environ 34 à 40 % en poids, a été hydrolysé en utilisant de l'acide chlorhydrique, à un pH de 1.8 et et à une température d'environ 128°C. Le procédé de conversion était terminé quand la valeur de DE du sirop de glucose converti atteignait environ 42. Le sirop de glucose résultant, obtenu par conversion acide, à 42 DE, a été clarifié en utilisant une centrifugeuse pour retirer l'huile résiduelle et la protéine. Ensuite, des procédés de raffinage par traitement au charbon actif et par échange d'ions ont été conduits pour décolorer et déminéraliser le matériau. Finalement, le matériau a été évaporé jusqu'à une teneur en matière sèche d'environ 80 % en poids.

38 litres de sirop de glucose converti à l'acide ayant un DE de 42 ont été introduits dans le réservoir d'alimentation, tel que celui décrit dans la figure 1, et dilués jusqu'à une teneur en matière sèche d'environ 43.5 % en poids. Le procédé était un système en simple étape avec un élément de membrane de nanofiltration ayant un diamètre de 10,16 cm. Le procédé de fractionnement était conduit comme une opération discontinue. Le perméat a été retiré du système, et le rétentat a été recyclé jusqu'au réservoir d'alimentation. De l'eau de dilution a été ajoutée périodiquement dans le réservoir d'alimentation pour maintenir le contenu en matières sèches du matériau en dessous d'environ 50 % en poids. Le recyclage de rétentat a été terminé quand la valeur de DE du rétentat atteignait environ 15. Le produit collecté avait un volume de 30 litres et une matière sèche d'environ 52.55 % en poids.

Le procédé a été mis en oeuvre à une pression d'environ 485 psi et à une température d'environ 50°C. Le flux de perméat était de 14,3 l/m²/h au départ et de 2,8 l/m²/h à la fin du fractionnement. La maltodextrine résultante a un DE de 14.9 et le spectre de carbohydrate suivant :

| Composant | % en poids sur matière sèche |
|---|---|
| Fructose | 0.021 |
| Dextrose | 0.616 |
| DP2 | 1.185 |
| DP3 | 3.649 |
| DP4 | 7.623 |
| DP5 | 10.302 |
| DP6 | 10.011 |
| DP7 | 6.839 |
| DP8 | 7.762 |
| DP9 | 6.679 |
| DP10 | 5.695 |
| DP11-21 | 31.900 |
| DP21+ | 7.719 |

La maltodextrine ci-dessus a ensuite été évaporée en utilisant un évaporateur sous vide rotatif de laboratoire jusqu'à une teneur en matières sèches de 70 % en poids pour des tests de stabilité au stockage. Deux échantillons, l'un sans ajustement de pH (pH environ = 4.5) et l'un avec un pH ajusté à 3.0 en utilisant de l'HCl à 7 %, ont été préparés pour les tests de stockage. Après un stockage de 4 mois dans des conditions de température ambiante, les deux échantillons étaient encore aussi clairs que l'original et exempts de rétrogradation. Il n'y avait pas non plus de croissance microbienne.

L'indice de polydispersité de la maltodextrine résultante est égal à 1.54. La viscosité de la maltodextrine de cet exemple est de 7.116 cps à 70 % de matières solides en poids et à température ambiante.

### EXEMPLE 4 :

Le matériau de départ pour le fractionnement sur membrane de nanofiltration de cet exemple était un sirop de glucose obtenu par conversion enzyme-enzyme à 23 DE , préparé, dans une première étape, en liquéfiant de l'amidon de maïs à 14 DE en utilisant une alpha amylase bactérienne (Thermamyl T-120, obtenue de Novo Nordisk) et, dans une seconde étape, en saccharifiant le matériau liquéfié obtenu à une matière sèche d'environ 30 % en poids et à une température d'environ 65°C en utilisant de l'alpha amylase bactérienne (Thermamyl T-120, Novo Nordisk). Le procédé de conversion a été terminé quand la valeur de DE du matériau converti atteignait environ 23. L'hydrolysat d'amidon de maïs obtenu par conversion enzyme-enzyme était ensuite clarifié en utilisant une membrane d'ultra-filtration pour retirer l'huile et la protéine.

Le même système et la même membrane de nanofiltration que dans l'exemple 1 ont été utilisés pour fabriquer la maltodextrine de cet exemple. 76 litres de sirop de glucose à 23 DE, d'une teneur en matière sèche d'environ 30 % en poids, ont été alimentés dans le réservoir d'alimentation, tel que celui présenté à la figure 1. Le procédé de fractionnement a été conduit en opération unitaire. Le perméat a été retiré du système et le rétentat a été recyclé au réservoir d'alimentation. La valeur de DE a été enregistrée périodiquement. L'eau de dilution était ajoutée périodiquement pour maintenir la teneur en matières sèches du matériau du réservoir d'alimentation à moins d'environ 40 % en poids. Le recyclage de rétentat était terminé quand la valeur de DE du rétentat atteignait environ 17. Le rétentat a ensuite été envoyé en aval. Puis un procédé de raffinage par traitement au charbon et par échange d'ions a été conduit pour décolorer et diminéraliser le rétentat. Celui-ci a ensuite été collecté dans un réservoir de stockage comme produit. Le produit collecté a un volume de 26,5 litres, et une teneur en matières sèches d'environ 47 % en poids.

Les conditions opératoires incluaient une pression d'environ 3,45.10⁶Pa et une température d'environ 45°C. Le flux de perméat était de 21,1 l/m²/h au départ et de 7,8 l/m²/h à la fin du fractionnement. La maltodextrine résultante a un DE de 16.7 et le spectre de carbohydrate suivant :

| Composant | % en poids sur matière |
|---|---|
| Fructose | 0.01 |
| Dextrose | 0.08 |
| DP2 | 1.71 |
| DP3 | 7.38 |
| DP4 | 4.33 |
| DP5 | 20.9 |
| DP6 | 20.58 |
| DP7 | 1.49 |
| DP8 | 1.49 |
| DP9 | 1.93 |
| DP10 | 2.2 |
| DP11-21 | 13.26 |
| DP21+ | 24.64 |

La maltodextrine obtenue a ensuite été évaporée en utilisant un évaporateur de laboratoire rotatif sous vide jusqu'à une teneur en matières sèches de 67 % en poids. La maltodextrine a été stockée à température ambiante pendant 2.5 mois et analysée. La maltodextrine restait claire et exempte de rétrogradation.

L'indice de polydispersité de la maltodextrine résultante est de 4.3. La viscosité de la maltodextrine résultante conforme à la présente invention est de 8.330 cp à 25°C et à 70 % de matière sèche, ce qui est plus faible que la maltodextrine convertie de façon conventionnelle citée dans le tableau 3 à l'exemple 6.

### EXEMPLE 5 :

113,5 litres de sirop de glucose à 42 DE obtenu par voie acide ont été alimentés dans un procédé de traitement sur membrane de nanofiltration à simple étage, tel que montré à la figure 1 (NIRO Hudson, WI), avec une nanomembrane à spirale de 10,16 cm (ASP40 de Advanced Membrane Technology, CA). 49,2 litres de rétentat liquide clair ayant un DE de 13.5 ont été obtenus. Le procédé a été mis en oeuvre à 3,45.10⁶ Pa et 45°C. La membrane utilisée était faite de polysulfone polysulfonatée avec une coupure de masse moléculaire d'environ 1.000 daltons. Durant le procédé, le flux de perméat a été retiré du système et le flux de rétentat a été recyclé au réservoir d'alimentation. Le test a continué jusqu'à ce que le DE du rétentat atteigne environ 14 DE. La teneur en matières solides du produit résultant était d'environ 50 % en poids et a été augmentée par évaporation jusqu'à une teneur d'environ 70 % en poids en utilisant un évaporateur sous vide rotatif de laboratoire. Le produit résultant a été analysé en utilisant un viscosimètre Brookfield et un chromatographe liquide à haute pression. La viscosité du produit analysé est seulement inférieure à environ la moitié de la viscosité du matériau produit conventionnellement et ayant un DE similaire, et le spectre de carbohydrate était unique en ceci qu'il présentait seulement 2.2 % de mono- et de disaccharides et 11.6 % en poids d'olygosaccharides avec un DP > 21. Le produit analysé à 71 % en poids de teneur en matières sèches a été stocké à température ambiante et il est resté clair pendant plus de 4 mois.

### EXEMPLE 6 :

L'avantage de la viscosité des produits selon la présente invention sur les maltodextrines conventionnelles converties par voie enzymatique est présenté dans le Tableau 1. Dans cet exemple, les échantillons produits dans les exemples 1, 2, 3 et 4 ont été analysés et comparés, en ce qui concerne la viscosité, avec le produit Glucidex® 19, une maltodextrine conventionnelle disponible commercialement auprès de la Société ROQUETTE FRERES, et avec le produit Maltrin® M180, une maltodextrine conventionnelle vendue par la Société Grain Processing Co.

**Tableau 1 -**

| Viscosité des maltodextrines à 25°C | | | | |
|---|---|---|---|---|
| Produit | DE | 65%MS | 70%MS | 75%MS |
| Présente invention avec alimentation à 42 DE (exemple 1) | 14.5 | 1650 | 7450 | 65500 |
| Présente invention avec alimentation à 36 DE (exemple 2) | 17.2 | 1560 | 6930 | 7950 |
| Présente invention avec alimentation à 42 DE (exemple 3) | 14.9 | -- | 7115 | -- |
| Présente invention avec alimentation à 23 DE (exemple 4) | 16.7 | -- | 8330 | -- |
| Maltodextrine conventionnelle (Maltrin® M180, vendue par Grain Processing Co.) | 19.4 | -- | 21560 | -- |
| Maltodextrin conventionnelle (Glucidex® 19, vendue par Roquette Freres) | 18.0 | 5240 | 18900 | 345000 |

Bien que ne souhaitant pas être lié par une théorie particulière, on pense que l'avantage de la viscosité des produits selon la présente invention sur les maltodextrines conventionnelles est dû à une distribution du spectre de carbohydrates plus étroite.

### EXEMPLE 7 :

Relativement à l'exemple 6, le spectre de carbohydrate de la présente invention, exemplifié dans les exemples 1, 2, 3 et 4 présente autant de DP1 et DP2 que de DP21+, en comparaison des maltodextrines commerciales ayant un DE similaire, tel que ceci est présenté sur le tableau 2.

De nouveau, dans cet exemple, les échantillons produits dans les exemples 1, 2, 3 et 4 ont été analysés et comparés avec Glucidex® 19 et Maltrin® M180, comme dans l'exemple 6, afin de déterminer leurs spectres de carbohydrate respectifs et leur polydispersité (MW/Mn) tel que ceci est indiqué dans le Tableau 2.

**Tableau 2 -**

| Spectre de carbohydrates par HPLC et polydispersité (Mw /Mn) par GPC | | | | | | |
|---|---|---|---|---|---|---|
| | Présente invention (exemple 1) | Présente invention (exemple 2) | Présente Invention (exemple 3) | Présente Invention (exemple 4) | Glucidex® 19 (Roquette Freres) | Maltrin® M180 (Grain Processin Co.) |
| DP1% | 0.808 | 2.120 | 0.64 | 0.09 | 1.81 | 2.21 |
| DP2% | 1.517 | 3.038 | 1.18 | 1.71 | 5.95 | 7.02 |
| DP3% | 3.557 | 5.803 | 3.65 | 7.38 | 8.27 | 9.20 |
| DP4% | 6.627 | 6.884 | 7.62 | 4.33 | 6.78 | 7.57 |
| DP5% | 8.359 | 9.032 | 10.30 | 20.9 | 7.14 | 7.25 |
| DP6% | 8.442 | 10.626 | 10.00 | 20.58 | 7.74 | 11.66 |
| DP7% | 7.960 | 7.789 | 6.80 | 1.49 | 5.80 | 8.49 |
| DP8-21% | 52.195 | 45.343 | 52.00 | 18.88 | 23.08 | 17.50 |
| DP21+ | 10.534 | 9.434 | 7.70 | 24.64 | 33.44 | 29.10 |
| Mw/Mn | 1.59 | 2.45 | 1.54 | 4.3 | 7.07 | 5.65 |

### EXEMPLE 8 :

Trois émulsions huile dans eau comprenant un arôme huile d'orange, de la lécithine, et un hydrolysat d'amidon à bas DE représentatif soit de : (1) un hydrolysat d'amidon à bas DE conventionnel (DRI-SWEET® fabriqué par Roquette America, Keokuk, Iowa) ayant un DE d'environ 18, ou (2) un hydrolysat d'amidon à bas DE non hydrogéné selon la présente invention ayant un DE d'environ 18 (LDESH), ou (3) la forme hydrogénée de l'hydrolysat d'amidon à bas DE selon la présente invention ayant un DE d'environ 18 (HLDESH), ont été préparées et évaluées en ce qui concerne la stabilité. La préparation de l'émulsion a été conduite à une température d'environ 22°C à environ 30°C. Dans une première étape de préparation des émulsions, 3 grammes de lécithine (émulsifiant) ont été mélangés avec 97 grammes des produits respectifs d'hydrolysat d'amidon à bas DE ayant une teneur en matières solides d'environ 45 % en poids dans un homogénéisateur ultra rapide à 20.000 tours/min pendant 3 minutes. Dans une seconde étape, tout en continuant à mélanger à 20.000 tours/min, 5 grammes d'arôme d'huile d'orange ont été ajoutés goutte à goutte au mélange pendant 5 minutes. Après addition complète, le mélange a été poursuivi encore pendant 2 minutes. Les émulsions résultantes ont été déterminées comprendre (en pour cent en poids) : 4.8 % d'arôme huile d'orange, 2.8 % de lécithine, 50.8 % d'eau, et 41.6 % base matière sèche de DRI-SWEET® ou de LDESH ou de HLDESH.

20 ml d'échantillons de chaque émulsion résultante ont été transférés dans des flacons individuels du type utilisé pour l'analyse chromatographique dite « head-space », puis bouchés et scellés avec un bouchon silicone téflon. Des échantillons de chacune des trois compositions d'émulsion ont alors été stockés dans lesdits flacons à trois températures différentes, c'est-à-dire environ 22°C, 50°C et 60°C.

Les échantillons des trois compositions d'émulsion ont été stockés à chacune des trois températures et évalués en ce qui concerne leur stabilité. Les résultats d'une évaluation périodique sont présentés dans le Tableau 3.

**Tableau 3 -**

| Emulsions comprenant l'arôme huile d'orange, la lécithine, et le DRI-SWEET® ou le LDESH ou le HLDESH | | | | | | | | | |
|---|---|---|---|---|---|---|---|---|---|
| Paramètres | DRI-SWEET® | | | LDESH | | | HLDESH | | |
| Température de stockage (°C) | 22 | 50 | 60 | 22 | 50 | 60 | 22 | 50 | 60 |
| Stabilité de l'émulsion après deux Jours de stockage | S | S | S | TS | TS | TS | TS | TS | TS |
| Stabilité de l'émulsion après cinq Jours de stockage | NS | NS | NS | S | S | S | S | S | S |
| Stabilité de l'émulsion après 15 Jours de stockage | NS | NS | NS | S | S | S | S | S | S |
| Temps pour observer une séparation de phase (jours) | 15 | 5 | 2 | >30 | >30 | >30 | >30 | >30 | >30 |
| Temps pour observer un un effet de crémage⁽²⁾ en jours | 15 | 5 | 2 | >30 | >30 | >30 | >30 | >30 | >30 |
| Temps pour observer un résidu ⁽³⁾ (jours) | 15 | 5 | 2 | >30 | >30 | >30 | >30 | >30 | >30 |

| | | | | | | | | | |
|---|---|---|---|---|---|---|---|---|---|
| ⁽¹⁾ TS = Très Stable S = Stable NS = Non Stable ⁽²⁾ c'est-à-dire apparition d'une couche crémeuse à la surface de l'émulsion | | | | | | | | | |
| ⁽³⁾ c'est-à-dire un résidu coloré observé au sommet de l'émulsion | | | | | | | | | |

### EXEMPLE 9 :

Trois compositions encapsulées comprenant de l'arôme huile d'orange, de la lécitine, et un hydrolysat d'amidon à faible DE représentatif de (1) un hydrolysat d'amidon à faible DE conventionnel (DRI-SWEET® , fabriqué par Roquette America, Keokuk, Iowa) ayant un DE d'environ 18, ou (2) un hydrolysat d'amidon non-hydrogéné à faible DE selon la présente invention ayant un DE d'environ 18 (LDESH), ou (3) la forme hydrogénée d'un hydrolysat d'amidon à bas DE selon la présente invention ayant un DE d'environ 18 (HLDESH) ont été préparés et évalués dans cet exemple.

Dans une première étape, une composition comprenant une émulsion a été préparée en mélangeant 6 grammes de lécithine avec 594 grammes des hydrolysats d'amidon à bas DE respectifs ayant une teneur en matières solides d'environ 45 % en poids dans un homogénéisateur ultra rapide à 20.000 tours/min pendant 3 minutes. Tout en continuant à mélanger, 30 grammes d'arôme huile d'orange ont été ajoutés goutte à goutte dans le mélange pendant 5 minutes. Après addition complète, le mélange a été poursuivi pendant encore 2 minutes. L'émulsion résultante a été déterminée comprendre, en pour cent en poids, 4.8 % d'arôme huile d'orange, 0.95 % de lécithine, 51.8 % d'eau, et 42.4 % base matière sèche de DRI-SWEET® ou de de LDESH ou HLDESH.

Dans une seconde étape, l'émulsion résultante a été alimentée sur la turbine d'alimentation chauffée d'un atomiseur (par exemple Büchi, Suisse) à travers une pompe péristaltique. De l'air comprimé chaud permettait l'atomisation de l'alimentation et séchait les gouttelettes dans le sécheur. Les conditions opératoires de l'atomiseur-sécheur sont résumées dans le Tableau 4.

**Tableau 4 -**

| Conditions opératoires de l'atomiseur-sécheur. | |
|---|---|
| PARAMETRES OPERATOIRES | CONDITIONS OPERATOIRES |
| Température d'entrée | 170°C |
| Température de sortie | 112-116°C |
| Pompe | 5-6 mL/min |
| Aspiration | 100% |
| Vide | -32 mbar |
| Vitesse d'alimentation en air | 650 L/h |

Le devenir de l'huile aromatisante a été déterminé par analyse par chromatographie gazeuse et vérifié par balance de masse.

Les encapsulats d'arôme atomisés résultants préparés en utilisant les formes non hydrogénées et hydrogénées de l'hydrolysat d'amidon à bas DE selon la présente invention (LDESH et HLDESH respectivement) sont des poudres comprenant des particules sphériques, généralement non cristallines, de matériau amorphe ayant une morphologie de film continu vitreux. Les résultats obtenus par examen de différentes propriétés des encapsulats d'arôme résultants atomisés sont résumés dans le Tableau 5.

**Tableau 5 -**

| Encapsulat comprenant de l'arôme huile d'orange et du DRI-SWEET® ou du LDESH ou du HLDESH. | | | |
|---|---|---|---|
| PROPRIETE | DRI-SWEET® | HLDESH | HLDESH |
| Huile totale % | 3.5 | 7.75 | 7.40 |
| Surface de l'huile % | 0.046 | 0.040 | 0.020 |
| Rétention de l'huile % | 34 | 76 | 71 |
| Humidité % | 3.34 | 3.63 | 2.56 |
| Température de transition vitreuse T_{g} | 8-11°C | 9-13°C | 14-22°C |
| Activité de l'eau | 0.168 | 0.177 | 0.157 |
| Diamètre moyen des particules (µm) | 9.01 | 10.81 | 13.27 |
| Résidu coloré formé ? | Oui - brun | Oui - Brun | Non |
| Solubilité dans l'eau froide | Instant | Instant | Instant |

Les encapsulats d'arôme atomisés résultants comprenant du LDESH et du HLDESH ont été trouvés posséder les propriétés suivantes : forme shérique, matériau poudreux et amorphe de morphologie de film vitreux continu avec un diamètre moyen de particules d'environ 10 à environ 13 µm ; une structure non cristalline avec une température de transition vitreuse supérieure à environ 8°C, une haute rétention de l'huile aromatisante, qui excède 70% ; une faible surface de l'huile, qui est en dessous de 0.05 %, une teneur en humidité d'environ 3 %, une basse activité de l'eau d'environ 0.157 à environ 0.177, une haute stabilité de l'huile et une faible vitesse d'oxydation, telle que mesurée par formation d'oxyde de limoène, relativement aux encapsulats avec la même concentration en huile et comprenant un hydrolysat d'amidon conventionnel.

Bien que seulement un mode de réalisation exemplifié de l'invention a été décrit en détail ci-dessus, l'homme de l'art se rendra compte immédiatement que plusieurs modifications sont possibles sans se départir significativement des enseignements nouveaux et des avantages de l'invention. Par conséquent, de telles modifications doivent être comprises dans le domaine de l'invention telle que définie dans les revendications qui suivent.

## Revendications

1. Procédé de fabrication d'un hydrolysat d'amidon à bas DE, ledit procédé comprenant le fractionnement d'un hydrolysat d'amidon ayant un DE plus élevé qu'environ 18 en utilisant une membrane de nanofiltration sélectionnée dans le groupe consistant dans les membranes de téflon, les membranes en acier inoxydable, les membranes céramiques, et les membranes polymériques ayant une coupure de poids moléculaire de moins de 4.000 daltons, dans des conditions de nanofiltration efficaces pour conduire à un hydrolysat d'amidon à bas DE ayant un DE de moins d'environ 25.

2. Procédé selon la revendication 1, dans lequel ladite membrane de nanofiltration est sélectionnée dans le groupe consistant dans les membranes polyamides et les membranes polysulfones polysulfonées ayant une coupure de poids moléculaire dans la gamme d'environ 400 daltons à environ 4.000 daltons, de préférence dans la gamme d'environ 800 daltons à environ 2.500 daltons.

3. Procédé selon la revendication 1, dans lequel ledit hydrolysat d'amidon à bas DE comprend un hydrolysat d'amidon à bas DE liquide, substantiellement non rétrogradant, ayant un DE de moins d'environ 25.

4. Procédé selon la revendication 1, comprenant l'hydrogénation dudit hydrolysat d'amidon à bas DE pour donner un hydrolysat d'amidon à bas DE hydrogéné.

5. Produit d'hydrolysat d'amidon à bas DE comprenant un hydrolysat d'amidon à bas DE ayant un DE de moins d'environ 25 et ayant un indice de polydispersité de moins d'environ 5.

6. Procédé pour fabriquer une émulsion substantiellement stable thermiquement et au stockage, comprenant la formation d'un mélange de l'hydrolysat d'amidon à bas DE selon la revendication 5 avec une concentration efficace d'au moins un ingrédient pour conduire à une émulsion.

7. Procédé selon la revendication 6, dans lequel ladite concentration efficace d'ingrédient se situe entre environ 0,1 % et environ 50 % en poids.

8. Procédé selon la revendication 6, dans lequel ledit hydrolysat d'amidon à bas DE comprend un contenu en matières solides dans la gamme d'environ 1 % à environ 75 % en poids.

9. Procédé selon la revendication 6, dans lequel ladite émulsion comprend en outre une quantité efficace d'un émulsifiant.

10. Procédé selon la revendication 6, dans lequel ledit hydrolysat d'amidon à bas DE est hydrogéné.

11. Emulsion substantiellement stable thermiquement et au stockage, comprenant l'hydrolysat d'amidon à bas DE selon la revendication 5 comme matrice aqueuse et au moins un autre ingrédient.

12. Emulsion selon la revendication 11, dans laquelle ledit hydrolysat d'amidon à bas DE est hydrogéné.

13. Procédé de fabrication d'un encapsulat d'un ingrédient substantiellement sec, comprenant les étapes de :
(1) formation d'une composition matricielle aqueuse comprenant l'hydrolysat d'amidon à bas DE selon la revendication 5 ;
(2) mélange d'au moins un ingrédient avec ladite composition matricielle pour former un mélange ; et
(3) séchage dudit mélange pour donner un encapsulat d'ingrédient substantiellement sec.

14. Procédé selon la revendication 13, dans lequel ledit mélange comprend une émulsion.

15. Procédé selon la revendication 13, dans lequel ledit hydrolysat d'amidon à bas DE est hydrogéné.

16. Encapsulat d'ingrédient substantiellement sec comprenant au moins un ingrédient piégé dans une matrice amorphe du produit selon la revendication 5.
